# EUROPEAN PATENT APPLICATION

(11) **EP 0 793 118 A2**
(43) Date of publication of application: **03.09.1997**
(21) Application number: 97301131.5
(22) Date of filing: 21.02.1997
(51) Int. Cl.: G01V 1/00

(54) **Pipework position and connection determining apparatus**

(30) Priority: 27.02.1996 GB 9604064; 01.03.1996 GB 9604469; 30.09.1996 GB 9620372
(71) Applicant: THAMES WATER UTILITIES LIMITED, Reading Berks. RG1 8DB (GB)
(72) Inventor: Ridgers, Donald Frederick, Lindford, Hampshire GU35 OYH (GB)
(74) Representative: Jacob, Reuben Ellis

(57) **Abstract**

The invention relates to apparatus 1 for acoustic investigation of buried pipework, comprising an acoustic generation device G1, G2, 30 adapted to generate an acoustic signal along a pipe, and an acoustic receiver adapted to detect a signal from the generation device, and to a method for acoustic investigation of buried pipework utilising said apparatus.

## Description

The invention relates to apparatus for acoustic investigation of buried pipework, and particularly to such apparatus for determining connection between pipes adapted to carry fluids.

It is often necessary to dig up the ground in order to install new utility supplies, or to repair existing ones. However, it is also often the case that the exact location of existing buried pipework is not known, which can delay the work, or lead to disruption of the existing buried pipework.

It is also often necessary to be able to determine or trace connections between pipes adapted to carry fluids, particularly in systems such as sewerage systems. In a sewerage system if there is a "wrong" connection between different parts thereof, for example between a domestic appliance outlet and storm sewer, there can be a problem of contamination. However, such pipes are usually underground, so once connection has taken place and the system is in use, it is usually virtually impossible to ascertain whether a particular connection is correctly made, or not.

It is accordingly an object of the invention to seek to mitigate these disadvantages.

According to a first aspect of the invention there is provided apparatus for acoustic investigation of buried pipework, comprising an acoustic generation device adapted to generate an acoustic signal in a pipe, and an acoustic receiver adapted to detect a signal from the generation device.

The apparatus may comprise an acoustic generation device adapted to generate an acoustic signal in a part of a pipe system, and an acoustic receiver adapted to receive and identify a signal from the generation device, whereby to determine to which part of the system the receiver is connected.

The receiver may be portable. This provides for flexibility of use of the apparatus.

The acoustic generator may be portable. This again provides for flexibility of use.

There may be at least two acoustic generators.

The system may comprise a water system, and the water system may comprise a separate/partially separate sewage system.

Alternatively, the water system may comprise a highway drainage system.

One part of the system may comprise a storm collection system and another part of the system may comprise a foul collection system, and the storm and foul systems may be connected by a cross connection. This provides for monitoring of connections between the respective system parts, particularly when the storm and foul systems may be connected by a cross connection.

There may be manholes for receiving a respective acoustic generation device. This provides for relative ease of access to the system.

The storm and foul systems may be connected with a dwelling, and there may be respective acoustic receivers in the storm and foul systems.

According to a second aspect of the invention there is provided a pipe system, including apparatus as defined above.

The apparatus may include a non-intrusive receiver adapted to detect sound signals and monitor their intensity, and the receiver and/or acoustic generator may be mobile or portable, such as for example the receiver comprising a hand-held receiver adapted for sweeping over an area for said signal detection.

The receiver may also comprise means to determine the depth of a buried pipe, and means for logging a pipe position. The logging means may comprise a transmitter for transmitting a pipe position to a monitor, the monitor being a remote monitor such as a global positioning system. The global positioning system may comprise one or more satellite adapted to receive input from a single transmitter for providing a map of a pipe system.

According to a third aspect of the invention there is provided a system for mapping a buried pipe network, comprising apparatus as set out above, and means to convert signals received from the receiver into position data, whereby to produce a map of a buried pipe network.

According to a fourth aspect of the invention there is provided a method for acoustic investigation of buried pipework, comprising the steps of positioning at a first point in the pipework an acoustic generation device adapted to generate an acoustic signal along a pipe, and detecting the presence of a signal produced thereby, remote from the acoustic generation device.

The method may include the step of detecting the presence or absence of a signal at a second point in the pipework remote from the acoustic generation device, to determine whether the points are connected.

The method may further include the step of detecting the presence of a signal and monitoring its intensity over an area in which the pipework is buried, to determine the position of the pipework.

Apparatus embodying the invention is hereinafter described by way of example, with reference to the accompanying drawings in which:
Fig. 1 shows schematically a sewerage system and a domestic dwelling connected thereto; and
Fig. 2 shows schematically a buried pipework system and operation of the invention.

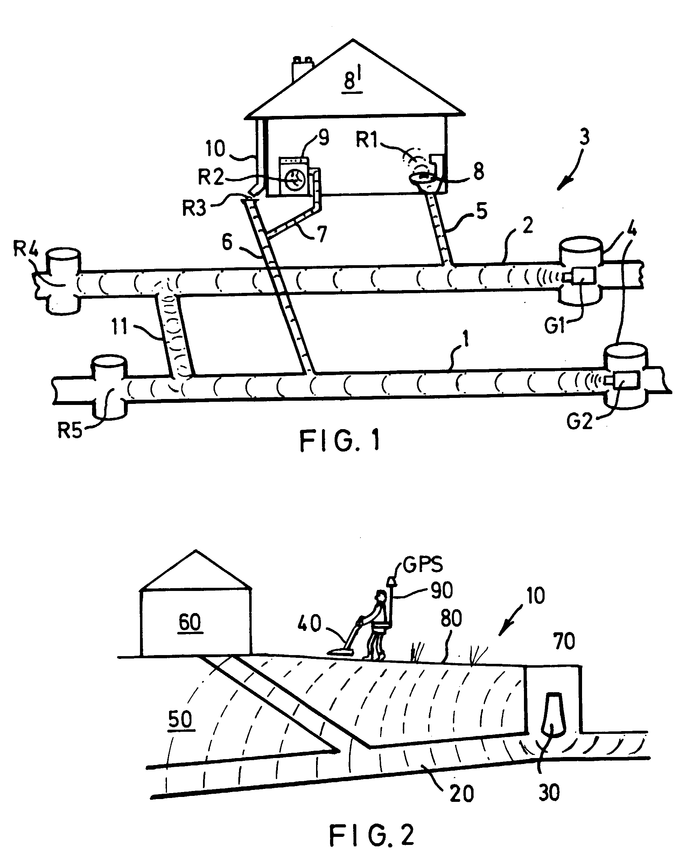

Referring to Fig. 1, there is shown apparatus for determining connections between pipes adapted to carry fluids, for example storm 1 and foul 2 sewers of a sewerage system 3, comprising in the embodiment two acoustic generation devices G1 and G2, respectively adapted to generate an acoustic signal, and an acoustic receiver R1, R2, R3, R4, R5 etc. adapted to receive and identify a signal from the generation devices, whereby to determine to which part of the system the receiver is connected.

The acoustic receiver devices R, ... R5 may themselves directly identify a signal from a generation device, or may alternatively identify the device indirectly via a data processor such as a computer either on site or at a location remote therefrom. In the embodiment shown, there are manholes 4 in the system 3, which is connected by pipes 5, 6, 7 with a dwelling 8' including a water closet 8, washing machine 9 and roof down-pipe 10. There is a cross-connection pipe 11 between the storm sewer pipe 1 and the foul sewer pipe 2 of the sewerage system 3.

An acoustic generation device G1 or G2 will emit a sound signal down a pipe/conduit where it will travel preferentially along the pipe's path. At appropriate or access points a receiver R1, etc. (which may take many forms) will detect the sound by recognising the generated acoustic signature. The distance between the generator G1, G2 and receiver R1, etc. will be determined by knowing the decay rate of the sound frequency emanating from G1, G2.

Using the invention it is possible in a separately sewered area containing the sewerage system 3, to ascertain if a pipe 5, 6 or 7 is connected to the appropriate collection system 1 or 2. Thus the apparatus, which is suitably portable, is used by placing the sound generation devices G1 and G2 respectively in a manhole 4 in the storm sewer 1 and foul sewer 2.

A sound receiver or recognition device R1 ... R5 etc. can be placed in any pipe or conduit of the system and by "recognising" the generated sound from G1, G2 can identify to which collection system, storm 1 or foul 2, to which the pipe or conduit 5, 6 or 7 is connected. Thus a team of workers can ascertain if and where there is an incorrectly connected pipe. Thus in the embodiment shown:-
- G1 =: Sound generation equipment in the foul sewer with a recognisable signature;
- G2 =: Sound generation equipment in the storm sewer with a recognisable signature;
- R1: (Receiver 1) detects the W.C. 8 is correctly connected to the foul sewer 2;
- R2: Detects the washing machine 9 is wrongly connected to the storm sewer 1;
- R3: Detects the downpipe 10 is correctly connected to the storm sewer 1;
- R4 & R5: Detect both foul and storm signals which indicates there is an internal cross connection 11 between the two sewers 1, 2.

The apparatus hereinbefore described is portable. However, it may be permanently affixed in a sewerage or other system, or at least the devices G1, G2, R4 and R5 may be permanent.

Referring now to Fig. 2, there is shown apparatus 10 embodying the invention, comprising an acoustic generation device 30 adapted to emit a sound signal along a pipe 20 and a non-intrusive detector or receiver 40 adapted to detect sound signals and monitor the intensity whereby to determine the position of the pipe 20.

The pipe 20 is part of an underground pipe network 50 such as a sewerage or drainage system of say a dwelling 60, and the acoustic generator 30 is mounted in a manhole or access point 70 for emitting the sound signal along the pipe 20. The receiver 40 is mobile, being a hand-held receiver in the embodiment. A user walks over the ground 80 sweeping the area and locating the pipe 20 by the intensity of the sound signal received. The higher the intensity, the closer is the pipe 20. The receiver 40 can also monitor the depth of the pipe and in this way the position of the pipe 20 can be determined. Moreover, in addition to locating a pipe 20, the position of the whole buried pipe network can be detected, logged and mapped. Thus a map of a whole pipe system can be generated using the apparatus 10 which for this purpose includes a global positioning system (GPS) which comprises a transmitter 90 for transmitting a signal to a satellite system. Signals received from different points as the receiver is swept over the pipe network can be used to map the network 50 to provide an accurate map.

The apparatus 10 described herein with reference to the drawing can be applied to ensure the location of a pipeline before its excavation, and can be used to locate pipes in a wall.

The apparatus can be used to locate any pipeline including an air path, and is accordingly not restricted to sewerage or drainage systems.

## Claims

1. Apparatus for acoustic investigation of buried pipework, characterised by an acoustic generation device adapted to generate an acoustic signal along a pipe, and an acoustic receiver adapted to detect a signal from the generation device.

2. Apparatus according to Claim 1, characterised by an acoustic generation device adapted to generate an acoustic signal in a part of a pipe system, and an acoustic receiver adapted to receive and identify a signal from the generation device, whereby to determine to which part of the system the receiver is connected.

3. Apparatus according to Claim 2, characterised in that the receiver is portable.

4. Apparatus according to Claim 2 or Claim 3, characterised in that the acoustic generator is portable.

5. Apparatus according to any of Claims 2 to 4, characterised in that there being at least two acoustic generators.

6. Apparatus according to any of Claims 2 to 5, characterised in that the system comprises a water system.

7. Apparatus according to Claim 6, characterised in that the water system comprises a separate/partially separate sewage system.

8. Apparatus according to Claim 6, characterised in that the water system comprises a highway drainage system.

9. Apparatus according to any of Claims 2 to 8, characterised in that one part of the system comprises a storm collection system and another part of the system comprises a foul water collection system.

10. Apparatus according to Claim 9, characterised in that the storm and foul water systems are connected by a cross connection.

11. Apparatus according to Claim 9 or Claim 10, characterised in that it includes manholes for receiving a respective acoustic generation device.

12. Apparatus according to any of Claims 9 to 11, characterised in that the storm and foul water systems are connected with a dwelling.

13. Apparatus according to any of Claims 9 to 12, characterised in that it includes respective acoustic receivers in the storm and foul water systems.

14. A pipe system, characterised by apparatus according to any preceding claim.

15. Apparatus according to Claim 1, characterised by an acoustic generation device adapted to emit a sound signal along a pipe wherein the receiver is a non-intrusive receiver adapted to detect sound signals and monitor their intensity.

16. Apparatus according to Claim 15, characterised by the receiver and/or acoustic generator being mobile or portable.

17. Apparatus according to Claim 16, characterised by the receiver comprising a hand-held receiver adapted for sweeping over an area for said signal detection.

18. Apparatus according to any of Claims 15 to 17, characterised by the receiver comprising means to determine the depth of a pipe.

19. Apparatus according to any of Claims 15 to 17, characterised by means for logging a pipe position.

20. Apparatus according to Claim 19, characterised in that the logging means comprises a transmitter for transmitting a pipe position to a monitor.

21. Apparatus according to Claim 20, characterised by the monitor being a remote monitor.

22. Apparatus according to Claim 21, characterised by the monitor comprising a global positioning system.

23. Apparatus according to Claim 22, characterised by the global positioning system comprising one or more satellite adapted to receive input from a single transmitter for providing a map of a pipe system.

24. A system for mapping a buried pipe network, characterised by apparatus according to any of Claims 15 to 24, and means to convert signals received from the receiver into position data, whereby to produce a map of a buried pipe network.

25. A method for acoustic investigation of buried pipework, characterised by the steps of positioning at a first point in the pipework an acoustic generation device adapted to generate an acoustic signal along a pipe, and detecting the presence of a signal produced thereby, remote from the acoustic generation device.

26. A method according to Claim 25, characterised by the step of detecting the presence or absence of a signal at a second point in the pipework remote from the acoustic generation device, to determine whether the points are connected.

27. A method according to Claim 25, characterised by the step of detecting the presence of a signal and monitoring its intensity over an area in which the pipework is buried, to determine the position of the pipework.
